## Europäisches Patentamt

## European Patent Office

## Office européen des brevets

(19)

(11) Veröffentlichungsnummer: **0 163 857**
**B1**

(12) **EUROPÄISCHE PATENTSCHRIFT**

(45) Veröffentlichungstag der Patentschrift: **08.08.90**

(51) Int. Cl.⁵: **G 01 B 3/00**

(21) Anmeldenummer: **85104324.0**

(22) Anmeldetag: **10.04.85**

(54) Positionsmesseinrichtung.

(30) Priorität: **25.05.84 DE 3419527**

(43) Veröffentlichungstag der Anmeldung:
**11.12.85 Patentblatt 85/50**

(45) Bekanntmachung des Hinweises auf die
Patenterteilung:
**08.08.90 Patentblatt 90/32**

(84) Benannte Vertragsstaaten:
**AT CH DE FR GB IT LI**

(56) Entgegenhaltungen:
**DE-A-2 911 047**
**DE-B-2 518 745**
**DE-C-2 712 421**
**DE-C-3 106 701**
**DE-U-7 906 759**

(73) Patentinhaber: **Dr. Johannes Heidenhain GmbH
Dr.-Johannes-Heidenhain-Strasse 5 Postfach
1260
D-8225 Traunreut (DE)**

(72) Erfinder: **Miller, Walter, Dr.
Adalbert-Stifter-Strasse 19
D-8220 Traunstein (DE)**
Erfinder: **Ernst, Alfons, Dipl.-Ing
Traunring 62
D-8225 Traunreut (DE)**

EP 0 163 857 B1

Courier Press, Leamington Spa, England.

**Beschreibung**

Die Erfindung betrifft eine Positionsmeßeinrichtung gemäß dem Oberbegriff des Anspruches 1.

Einrichtungen bei Positionsmeßeinrichtungen zur Kompensation von Fehlern, insbesondere von Teilungsfehlern eines Maßstabs, Maschinenfehlern von Maschinenteilen und/oder temperaturbedingten Fehlern sind bereits bekannt.

Aus der DE—PS 27 12 421 und dem GM 79 06 759 ist eine gekapselte Längenmeßeinrichtung bekannt, bei der ein Maßstab auf einem Maßstabträger längsverschieblich angeordnet und an beiden Enden mit einem zu messenden Maschinenteil über Befestigungselemente verbunden ist, die ihrerseits unabhängig vom Maßstabträger starr am Maschinenteil befestigt sind. Während das eine Ende des Maßstabs direkt mit dem einen Befestigungselement verbunden ist, ist das andere Ende des Maßstabs zur Korrektur von Teilungsfehlern und/oder von Maschinenfehlern über eine federbelastete Dehneinrichtung mit dem anderen Befestigungselement verbunden. Die Längenmeßeinrichtung der DE—OS 29 11 047 weist neben einer Dehneinrichtung noch eine zusätzliche Staucheinrichtung auf.

In der Druckschrift der Fa. Dr. Johannes Heidenhain "Inkrementales Längenmeßsystem LIDA 225", Februar 1982, ist eine Längenmeßeinrichtung bechrieben, bei der ein Maßband auf einem Maßbandträger geringfügig längsverschieblich angeordnet und an beiden Enden mit einem zu messenden Maschinenteil über Befestigungselemente verbunden ist, die ihrerseits unabhängig vom Maßbandträger starr am Maschinenteil befestigt sind. Während das eine Ende des Maßbandes direkt mit dem einen Befestigungselement verbunden ist, ist das andere Ende über eine federbelastete Dehneinrichtung mit dem anderen Befestigungselement zur Einstellung des Sollmaßes des Maßbandes verbunden; nach dem Einstellen dieses Sollmaßes kann das der Dehneinrichtung zugeordnete Ende des Maßbandes mit einem zusätzlichen Klemmelement am Maschinenteil befestigt werden.

Die DE—PS 25 18 745 offenbart eine gekapselte Längenmeßeinrichtung, deren Gehäuse an beiden Enden über je einen Winkel an einem Maschinenteil gelenkig befestigt ist. Ein Maßstab ist im Gehäuse längsverschieblich angeordnet und zur Korrektur von Teilungsfehlern und/oder Maschinenfehlern an beiden Enden jeweils über eine federbelastete Dehneinrichtung oder eine federbelastete Staucheinrichtung mit den Winkeln verbunden.

Aus der DE—PS 31 06 701 ist eine Einrichtung bei einer Längenmeßeinrichtung für Werkzeugmaschinen bekannt, bei der zur Kompensation thermischer Längenänderungen von Maschinenteilen ein Dehnstab aus einem Material mit hohem thermischen Ausdehnungskoeffizienten mit einem Ende an einem Maschinenteil und mit dem anderen Ende an einem Maßstab befestigt ist, wobei die Wärmedehnung des Dehnstabes gleich derjenigen des Maschinenteils ist, so daß die Wärmedehnung des Maschinenteils von der Meßeinrichtung erfaßt wird.

In der DE—OS 28 53 771 ist eine Längenmeßeinrichtung beschrieben, deren Gehäuse zur Aufnahme eines Maßstabs und einer Abtasteinheit an beiden Enden über Befestigungselemente mit einem zu messenden Maschinenteil verbunden ist. Während das eine Ende des Gehäuses direkt mit dem ersten Befestigungselement verbunden ist, ist zwischen dem anderen Ende des Gehäuses und dem zweiten Befestigungselement ein Längenausgleichselement zur Temperaturkompensation angeordnet, so daß dieses Ende des Gehäuses mit einem translatorischen Freiheitsgrad in Längsrichtung des Gehäuses gelagert ist.

Der US—PS 38 16 002 entnimmt man eine Längenmeßeinrichtung, deren Gehäuse zur Aufnahme eines Maßstabs und einer Abtasteinheit mit einem Ende fest und mit dem anderen Ende zur Kompensation thermisch bedingter Längenänderungen längsverschieblich mit einem Maschinenteil verbunden ist. Der Maßstab ist innerhalb des Gehäuses an einem Ende fixiert und mit dem anderen Ende über eine Spannvorrichtung mit dem Gehäuse verbunden. Mit dieser federbelasteten Spannvorrichtung bleibt der Maßstab von den temperaturbedingten Längenänderungen des Gehäuses unbeeinflußt.

In Räumen mit Bearbeitungsmaschinen, an denen derartige Positionsmeßeinrichtungen eingesetzt werden, herrscht im allgemeinen keine konstante Temperatur vor. Ebenso ändern sich die Temperaturen der Werkzeugmaschinen, an denen die Positionsmeßeinrichtungen angebracht sind, während der Bearbeitungsdauer von Werkstücken ständig. Da aus Kostengründen in den seitensten Fällen das Maschinenteil und der Maßstab sowie das Gehäuse für den Maßstab aus Materialien mit gleichen thermischen Ausdehnungskoeffizienten bestehen werden, unterliegen bei den unvermeidlichen Temperaturänderungen insbesondere das Maschinenteil und der Maßstab unterschiedlichen thermischen Längenänderungen, so daß Meßungenauigkeiten auftreten können, die bei den heutigen Anforderungen an die Meßgenauigkeit nicht mehr tragbar sind. Am häufigsten kombiniert man Grauguß für die Maschinenteile, Aluminium für das Gehäuse und Glas oder Stahl für den Maßstab miteinander.

Der Erfindung liegt die Aufgabe zugrunde, eine Positionsmeßeinrichtung der genannten Gattung anzugeben, bei der durch Temperaturänderungen bedingte Meßungenauigkeiten vermieden werden.

Diese Aufgabe wird erfindungsgemäß durch die kennzeichnenden Merkmale des Anspruches 1 gelöst.

Die mit der Erfindung erzielten Vorteile bestehen insbesondere darin, daß mit einfachen Mitteln durch die starre Befestigung des Maßstabs wenigstens an beiden Enden am zu messenden Objekt bei Temperaturänderungen sowohl das Objekt als auch der Maßstab gleiche thermische Längenänderungen erfahren, so daß Meßungenauigkeiten beispielsweise bei der Bearbeitung eines Werkstückes auf einer Werkzeugmaschine nicht mehr auftreten können. Wenigstens an einem Ende ist der Maßstab von einer kalibrierten Dehn- oder Staucheinrichtung beaufschlagt, so daß die Teilungslänge des Meßstabs bei der Montage an einem Maschinenteil an die Temperatur des Maschinenteils angepaßt werden kann.

Weitere vorteilhafte Ausbildungen entnimmt man den abhängigen Ansprüchen.

Ausführungsbeispiele der Erfindung werden anhand der Zeichnung näher erläutert.

Es zeigen

Figur 1 eine Längsansicht einer Positionsmeßeinrichtung an Maschinenteilen einer Maschine und

Figur 2 eine Längsansicht einer weiteren Positionsmeßeinrichtung an Maschinenteilen einer Maschine.

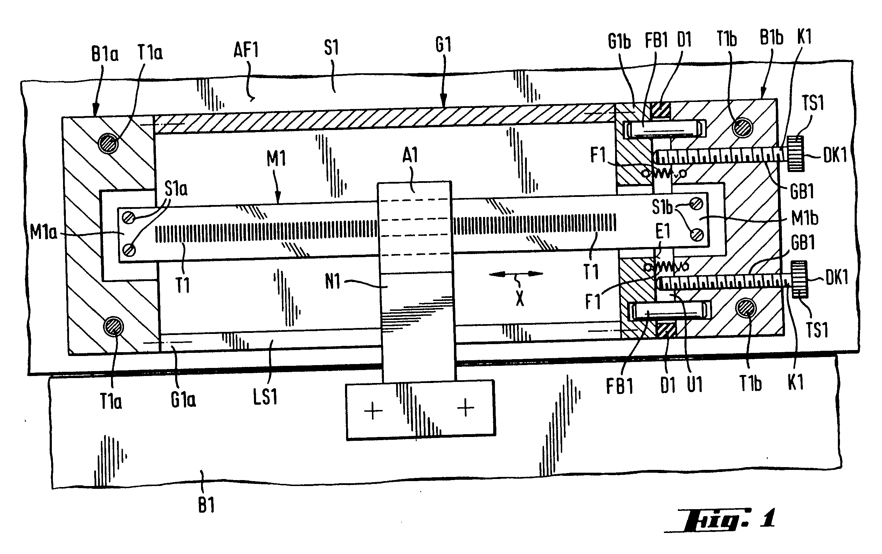

Nach Figur 1 ist an einem Schlitten S1 und an einem Bett B1 einer nicht gezeigten Werkzeugmaschine eine Positionsmeßeinrichtung mit einem Maßstab M1 und einer den Maßstab M1 abtastenden Abtasteinheit A1 befestigt; der Schlitten S1 und das Bett B1 stellen das zu messende erste und zweite Objekt dar. Da der Maßstab M1 beispielsweise aus Stahl und der Schlitten S1 beispielsweise aus Grauguß unterschiedliche thermische Ausdehnungskoeffizienten besitzen, erfahren der Maßstab M1 und der Schlitten S1 bei den unvermeidlichen Temperaturänderungen der Werkzeugmaschine während der Bearbeitungsdauer eines Werkstücks unterschiedliche thermische Längenänderungen, die Meßungenauigkeiten zur Folge haben können.

Gemäß Figur 1 ist bei dieser Positionsmeßrichtung der Maßstab M1 in Form eines flexiblen Maßbandes aus Stahl an beiden Enden M1a, M1b mittels Schrauben S1a, S1b starr mit zwei Befestigungselementen B1a, B1b verbunden.

Zwischen den beiden Befestigungselementen B1a, B1b ist ein biegesteifer Maßstabträger G1 in Form eines Gehäuses zur Aufnahme des Maßbandes M1 und der Abtasteinheit A1 zur Abtastung der Teilung T1 des Maßbandes M1 angeordnet. Das Maßband M1 ist auf einer Innenfläche des Gehäuses G1 mittels einer nicht gezeigten elastischen Klebeschicht angeordnet, die eine gewisse Längsverschieblichkeit des Maßbandes M1 bezüglich des Gehäuses G1 erlaubt.

Das erste Befestigungselement B1a ist direkt auf beliebige Weise am ersten Ende G1a des Gehäuses G1 befestigt, während das zweite Befestigungselement B1b über Führungsbolzen FB1, die in Bohrungen im zweiten Ende G1b des Gehäuses G1 und im dem Gehäuse G1 zugewandten Teil des zweiten Befestigungselementes B1b eingesetzt sind, in Meßrichtung X relativ beweglich zum Gehäuse G1 mit dem Gehäuse G1 verbunden ist. In zwei Gewindebohrungen GB1 des zweiten Befestigungselementes B1b sind jeweils eine Kalibrierschraube K1 angeordnet, die sich an der Endfläche E1 des zweiten Endes G1b des Gehäuses G1 abstützen. Zwei Zugfedern F1, die mit dem zweiten Gehäuseende G1b und dem zweiten Befestigungselement B1b verbunden

sind, bewirken die Anlage der Kalibrierschrauben K1 an der Endfläche E1 des zweiten Endes G1b des Gehäuses G1. Der Spalt U1 zwischen dem zweiten Gehäuseende G1b und dem zweiten Befestigungselement B1b ist mit einer elastischen Dichtung D1 nach außen zur Kapselung gegen Verunreinigungen verschlossen.

Das Maßband M1 wird nun bei der Herstellung so gefestigt, daß die Teilungslänge der Teilung T1 kürzer als die erforderliche Teilungslänge ist. Zur Eichung des Maßbandes M1 auf die richtige Teilungslänge bei einer Normaltemperatur wird das Maßband M1 mittels eines Laserinterferometers vermessen und mittels der beiden Kalibrierschrauben K1 auf die richtige Teilungslänge bei dieser Normaltemperatur gedehnt. Da die Werkzeugmaschine, an der diese Positionsmeßeinrichtung zum Einsatz kommen soll, im allgemeinen nicht diese Normaltemperatur aufweist, werden eine zweite Eichmessung bei einer beliebigen zweiten Temperatur durchgeführt und die Drehknöpfe DK1 der beiden Kalibrierschrauben K1 mit jeweils einer Temperaturskala TS1 versehen. die aus den beiden Temperaturmessungen durch Interpolation gewonnen wurde, so daß die Teilungslänge des Maßbandes M1 bei der Montage am Schlitten S1 an die Temperatur des Schlittens S1 angepaßt werden kann.

Bei der Montage der bei der Herstellung auf die Normaltemperatur von beispielsweise 20°C geeichten Positionsmeßeinrichtung an der Werkzeugmaschine wird zunächst die Temperatur des Schlittens S1 der Werkzeugmaschine gemessen. Diese gemessene Temperatur wird an der Positionsmeßeinrichtung mittels der Temperaturskala TS1 der Kalibrierschrauben K1 eingestellt, woraufhin die beiden Befestigungselemente B1a, B1b auf einer Anbaufläche AF1 des Schlittens S1 starr mittels Schrauben T1a, T1b befestigt werden; gleichfalls wird die Abtasteinheit A1 über einen Mitnehmer N1, der durch einen von nicht gezeigten Dichtlippen verschlossenen Längsschlitz LS1 des Gehäuses G1 hindurchgreift, mit dem Bett B1 der Werkzeugmaschine verbunden. Anschließend werden die beiden Kalibrierschrauben K1 gelöst, so daß kein Kontakt mehr zwischen der Endfläche E1 des zweiten Endes G1b des Gehäuses G1 und den beiden Kalibrierschrauben K1 besteht, um eine mechanische Überbestimmung zu vermeiden. Durch diese starre Befestigung der beiden Enden M1a, M1b des Maßstabs M1 am Schlitten S1 erfahren bei Temperaturänderungen sowohl der Schlitten S1 als auch das Maßband M1 die gleichen thermischen Längenänderungen, so daß Meßungenauigkeiten bei der Bearbeitung eines Werkstückes nicht mehr auftreten können.

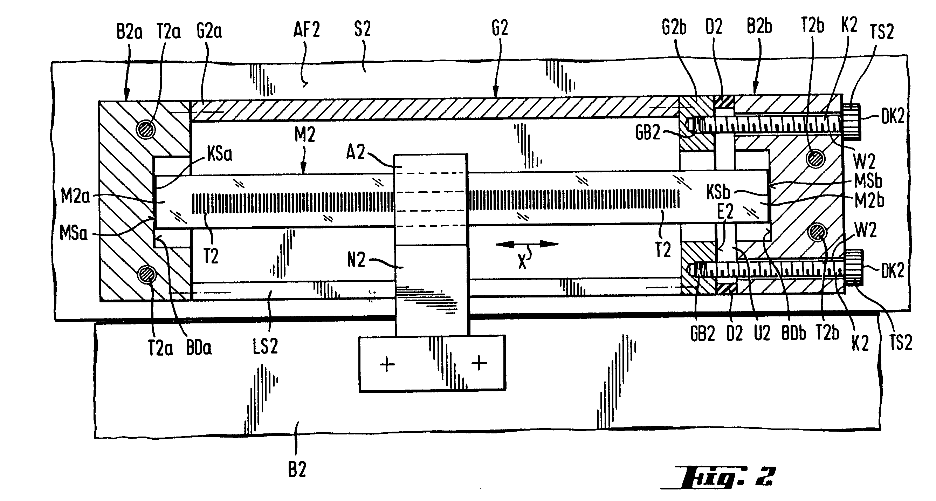

Gemäß Figur 2 ist bei einer weiteren Positionsmeßeinrichtung ein biegesteifer Maßstab M2 aus Glas an beiden Enden M2a, M2b starr mit zwei Befestigungselementen B2a, B2b mittels einer Klebeschicht KSa, KSb verbunden, die sich zwischen den Stirnflächen MSa, MSb des Maßstabs M2 und zugeordneten Druckflächen BDa, BDb der Befestigungselemente B2a, B2b befindet. Zwischen den beiden Befestigungselementen B2a, B2b ist ein biegesteifer Maßstabträger G2 in Form eines Gehäuses zur Aufnahme des Maßstabes M2 und einer Abtasteinheit A2 zur Abtastung der Teilung T2 des Maßstabes M2 angeordnet. Der Maßstab M2 ist auf einer Innenfläche des Gehäuses G2 mittels einer nicht gezeigten elastischen Klebeschicht angeordnet, die eine gewisse Längsverschieblichkeit des Maßstabes M2 bezüglich des Gehäuses G2 erlaubt.

Das erste Befestigungselement B2a ist direkt auf beliebige Weise am ersten Ende G2a des Gehäuses G2 befestigt, während das zweite befestigungselement B2b in Meßrichtung X relativ beweglich zum Gehäuse G2 mit dem Gehäuse G2 verbunden ist. In zwei Bohrungen W2 des zweiten Befestigungselementes B2b sind jeweils eine Kalibrierschraube K2 angeordnet, die in zwei Gewindebohrungen GB2 in der Endfläche E2 des zweiten Endes G2b des Gehäuses G2 eingreifen. Der Spalt U2 zwischen dem zweiten Gehäuseende G2b und dem zweiten Befestigungselement B2b ist mit einer elastischen Dichtung D2 nach außen zur Kapselung gegen Verunreinigungen verschlossen.

Der biegesteife Maßstab M2 wird nun bei der Herstellung so gefertigt, daß die Teilungslänge der Teilung T2 länger als die erforderliche Teilungslänge ist. Zur Eichung des Maßstabs M2 auf die richtige Teilungslänge bei einer Normaltemperatur wird der Maßstab M2 mittels eines Laserinterferometers vermessen und mittels der beiden Kalibrierschrauben K2 auf die richtige Teilungslänge bei dieser Normaltemperatur gestaucht. Da die Werkzeugmaschine, an der diese Positionsmeßeinrichtung zum Einsatz kommen soll, im allgemeinen nicht diese Normaltemperatur aufweist, werden eine zweite Eichmessung bei einer beliebigen zweiten Temperatur durchgeführt und die Drehkopfe DK2 der beiden Kalibrierschrauben K2 mit jeweils einer Temperaturskale TS2 versehen, die aus den beiden Temperaturmessungen durch Interpolation gewonnen wurde, so daß die Teilungslänge des Maßstabs M2 bei der Montage an einem Schlitten S2 an die Temperatur des Schlittens S2 angepaßt werden kann.

Bei der Montage der bei der Herstellung auf die Normaltemperatur von beispielsweise 20°C geeichten Positionsmeßeinrichtung an der Werkzeugmaschine wird zunächst die Temperatur des Schlittens S2 der Werkzeugmaschine gemessen. Diese gemessene Temperatur wird an der Positionsmeßeinrichtung mittels der Temperaturskala TS2 der Kalibrierschrauben K2 eingestellt, woraufhin die beiden Befestigungselemente B2a, B2b auf einer Anbaufläche AF2 des Schlittens S2 starr mittels Schrauben T2a, T2b befestigt werden; gleichfalls wird die Abtasteinheit A2 über einen Mitnehmer N2, der durch einen von nicht gezeigten Dichtlippen verschlossenen Längsschlitz LS2 des Gehäuses G2 hindurchgreift, mit dem Bett B2 der Werkzeugmaschine verbunden. Anschließend werden die beiden Kalibrierschrauben K2 gelöst, so daß sie zur Stauchung des Maßstabes M2 keinen Beitrag mehr liefern, um eine mechanische Überbestimmung zu vermeiden. Durch diese starre Befestigung der beiden Enden M2a, M2b des Maßstabes M2 am Schlitten S2 erfahren bei Temperaturänderungen sowohl der Schlitten S2 als auch der Maßstab M2 die gleichen thermischen Längenänderungen, so daß Meßungenauigkeiten bei der Bearbeitung eines Werkstückes nicht mehr auftreten können.

In nicht gezeigter Weise können auch die beiden Stirnflächen MSa, MSb des biegesteifen Maßstabs M2 nach Figur 2 zur Stauchung in Anlage an den zugehörigen Druckflächen BDa, BDb der beiden Befestigungselemente B2a, B2b durch einen U-förmigen Halter gehalten werden, der in den Befestigungselementen B2a, B2b auf beliebige Weise befestigt ist.

In nicht dargestellter weise kann der Maßstab auch in einer Nut des Maßstabträgers angeordnet sein, die den Maßstab auf beiden Längsseiten formschlüssig, aber kräftefrei umschließt. Bei großen Meßlängen kann der Maßstab auch an mehreren Stellen starr am Schlitten der Maschine befestigt werden. In diesem Fall besteht der Maßstabträger aus mehreren Teilstücken, zwischen denen Befestigungselemente angeordnet sein können. Diese Befestigungselemente können wiederum mit einer Dehn- oder Staucheinrichtung versehen sein, so daß der Maßstab auch in Teilbereichen auf die jeweils richtige Teilungslänge eingestellt werden kann.

Die Erfindung ist bei optischen, lichtelektrischen, magnetischen, induktiven oder kapazitiven, sowohl absolution als auch inkrementalen Positionsmeßeinrichtungen mit Erfolg einsetzbar.

**Patentansprüche**

1. Positionsmeßeinrichtung zur Messung der Relativlage zweier Objekte, bei der ein unmittelbar eine Teilung aufweisender Maßstab mit dem ersten Objekt und eine die Teilung des Maßstabs abtastende Abtasteinheit mit dem zweiten Objekt verbunden sind und die thermischen Ausdehnungskoeffizienten des Maßstabs und des ersten Objekts sich voneinander unterscheiden, dadurch gekennzeichnet, daß zur Kompensation unterschiedlicher thermischer Längenänderungen zwischen dem Maßstab (M) und dem ersten Objekt (S) der Maßstab (M) wenigstens an beiden Enden (Ma, Mb) starr am ersten Objekt (S) befestigt und wenigstens an einem Ende (Mb) von einer kalibrierten Spanneinrichtung (K) nur zu einer der starren Befestigung am ersten Objekt (S) vorangehenden Temperaturkompensation des Maßstabs (M) bezüglich des ersten Objekts (S) beaufschlagt ist.

2. Meßeinrichtung nach Anspruch 1, dadurch gekennzeichnet, daß der Maßstab (M) auf einem biegesteifen Maßstabträger (G) geringfügig längsverschieblich angeordnet und wenigstens an beiden Enden (Ma, Mb) direkt mit jeweils einem Befestigungselement (Ba, Bb) starr verbunden ist, daß jedes dieser Befestigungselemente (Ba, Bb) starr am ersten Objekt (S) befestigt und mit dem Maßstabträger (G) verbunden ist und daß wenigstens ein Befestigungselement (Bb) die Spanneinrichtung (K) zur Beaufschlagung des Maßstabs (M) aufweist.

3. Meßeinrichtung nach Anspruch 2, dadurch gekennzeichnet, daß ein erstes Befestigungselement (B1a) direkt am ersten Ende (G1a) des Maßstabträgers (G1) befestigt und ein zweites Befestigungselement (B1b) in Meßrichtung X beweglich mit dem zweiten Ende (G1b) des Maßstabträgers (G1) verbunden sind und daß der Maßstab (M1) aus einem flexiblen Maßband und die Spanneinrichtung (K1) aus einer Dehneinrichtung im zweiten Befestigungselement (B1b) bestehen.

4. Meßeinrichtung nach Anspruch 2, dadurch gekennzeichnet, daß ein erstes Befestigungselement (B2a) direkt am ersten Ende (G2a) des Maßstabträgers (G2) befestigt und ein zweites Befestigungselement (B2b) in Meßrichtung X beweglich mit dem zweiten Ende (G2b) des Maßstabträgers (G2) verbunden sind, daß der Maßstab (M2) biegesteif ausgebildet ist und daß die Spanneinrichtung (K2) aus einer Dehneinrichtung und/oder aus einer Staucheinrichtung im zweiten Befestigungselement (B2b) besteht.

5. Meßeinrichtung nach den Ansprüchen 2 oder 3, dadurch gekennzeichnet, daß die Dehneinrichtung (K1) aus wenigstens einem im Befestigungselement (B1b) angeordneten Zugelement besteht, das sich direkt am Maßstabträger (G1) abstützt.

6. Meßeinrichtung nach Anspruch 4, dadurch gekennzeichnet, daß der biegesteife Maßstab (M2) an beiden Enden (M2a, M2b) mit seinen Stirnflächen (MSa, MSb) an Druckflächen (BDa, BDb) der beiden Befestigungselemente (B2a, B2b) anliegt und daß die Staucheinrichtung (K2) aus wenigstens einem im Befestigungselement (B2b) angeordneten Druckelement besteht, das direkt am Maßstabträger (G2) angreift.

7. Meßeinrichtung nach den Ansprüchen 3 oder 5, dadurch gekennzeichnet, daß der Maßstab (M1) in Form des flexiblen Maßbandes eine Teilung (T1) mit einem bestimmten Untermaß aufweist und im gedehnten Zustand mittels einer Temperaturskala (TS1) der Dehneinrichtung (K1) bezüglich des ersten Objekts (S1) temperaturkompensierbar ist.

8. Meßeinrichtung nach den Ansprüchen 4 oder 6, dadurch gekennzeichnet, daß der biegesteife Maßstab (M2) eine Teilung (T2) mit einem bestimmten Übermaß aufweist und im gestauchten Zustand mittels einer Temperaturskala (TS2) der Staucheinrichtung (K2) bezüglich des ersten Objekts (S2) temperaturkompensierbar ist.

9. Meßeinrichtung nach den Ansprüchen 5 oder 7 dadurch gekennzeichnet, daß das Zugelement der Dehneinrichtung (K1) aus einer mit einer Temperaturskala (TS1) versehenen Kalibrierschraube besteht.

10. Meßeinrichtung nach den Ansprüchen 6 oder 8, dadurch gekennzeichnet, daß das Druckelement der Staucheinrichtung (K2) aus einer mit einer Temperaturskala (TS2) versehenen Kalibrierschraube besteht.

11. Meßeinrichtung nach Anspruch 6, dadurch gekennzeichnet, daß der biegesteife Maßstab (M2) an beiden Enden (M2a, M2b) mit seinen Stirnflächen (MSa, MSb) an den Druckflächen (BDa, BDb) der beiden Befestigungselemente (B2a, B2b) mittels einer Klebeschicht (KSa, KSb) befestigt ist.

12. Meßeinrichtung nach Anspruch 6, dadurch gekennzeichnet, daß der biegesteife Maßstab (M2) an beiden Enden (M2a, M2b) mit seinen Stirnflächen (MSa, MSb) an den Druckflächen (BDa, BDb) der beiden Befestigungselemente (B2a, B2b) mittels eines Halters geklemmt ist.

13. Meßeinrichtung nach Anspruch 2, dadurch gekennzeichnet, daß der Meßstabträger (G) aus wenigstens zwei aneinanderstoßenden Teilstücken gebildet ist.

**Revendications**

1. Dispositif de mesure de position pour mesurer la position relative de deux objets, dans lequel une règle de mesure portant directement une graduation est reliée au premier objet et une unité d'exploration explorant la division de la règle de mesure est reliée au deuxième objet et les coefficients de dilatation thermique de la règle de mesure et du premier objet différent l'un de l'autre, caractérisé par la fait qu'en vue de la compensation des variations de longueur thermiques différentes entre la règle de mesure (M) et le premier objet (S), la règle de mesure (M) est fixée au moins aux deux extrémités (Ma, Mb) rigidement au premier objet (S) et est sollicitée, au moins à une extrémité (Mb), par un dispositif de tension calibré (K) uniquement en vue d'une compensation de température par rapport au premier objet (S) de la règle de mesure (M) précédant la fixation rigide sur la premier objet (S).

2. Dispositif de mesure suivant la revendication 1, caractérisé par le fait que le règle de mesure (M) est montée de façon légèrement déplaçable longitudinalement en translation sur un support de règle de mesure (G) rigide en flexion et est fixée au moins aux deux extrémités (Ma, Mb) directement à un élément de fixation (Ba, Bb), respectivement, que chacun de ces éléments de fixation (Ba, Bb) est fixé rigidement au premier objet (S) et est relié au support de régle de mesure (G) et qu'au moins un élément de fixation (Bb) comporte le dispositif de tension (K) pour la sollicitation de la règle de mesure (M).

3. Dispositif de mesure suivant la revendication 2, caractérisé par le fait qu'un premier élément de fixation (B1a) est fixé directement à la première extrémité (G1a) du support de règle de mesure (G1) et un deuxième élément de fixation (B1b) est relié de façon déplaçable dans la direction de mesure X à la deuxième extrémité (G1b) du support de règle de mesure (G1) et que la règle de mesure (M1) est constituée par un ruban de mesure flexible et le dispositif de tension (K1) par un dispositif de traction dans le deuxième élément de fixation (B1b).

4. Dispositif de mesure suivant la revendication 2, caractérisé par le fait qu'un premier élément de fixation (B2a) est directement fixé à la première extrémité (G2a) du support de règle de mesure (G2) et un deuxième élément de fixation (B2b) est relié de façon déplaçable dans la direction de mesure X à la deuxième extrémité (G2b) du support de règle de mesure (G2), que la règle de mesure (M2) est rigide en flexion et que le dispositif de serrage (K2) comprend un dispositif de traction et/ou un dispositif de compression dans le deuxième élément de fixation (B2b).

5. Dispositif de mesure suivant les revendications 2 ou 3, caractérisé par le fait que le dispositif de traction (K1) se compose d'au moins un élément de traction disposé dans l'élément de fixation (B1b) et s'appuyant directement contre le support de règle de mesure (G1).

6. Dispositif de mesure suivant la revendication 4, caractérisé par le fait que la règle de mesure (M2) rigide en flexion est appliquée aux deux extrémités (M2a, M2b) par ses surfaces frontales (MSa, MSb) contre des surfaces de poussée (BDa, BDb) des deux éléments de fixation (B2a, B2b) et que le dispositif de compression (K2) se compose d'au moins un élément de poussée disposé dans l'élément de fixation (B2b) et agissant directement sur le support de règle de mesure (G2).

7. Dispositif de mesure suivant les revendications 3 ou 5, caractérisé par le fait que la règle de mesure (M1) sous la forme d'une bande de mesure flexible présente une division (T1) avec une sous-cote déterminée et peut, à l'état tiré, être compensée en température par rapport au premier objet (S1) au moyen d'une échelle de température (TS1) du dispositif de traction (K1).

8. Dispositif de mesure suivant les revendications 4 ou 6, caractérisé par le fait que la règle de mesure (M2) rigide en flexion présente une division (T2) avec une sur-cote déterminée et peut, à l'état comprimé, être compensée en température par rapport au premier objet (S2) au moyen d'une échelle de température (TS2) du dispositif de compression (K2).

9. Dispositif de mesure suivant les revendications 5 ou 7, caractérisé par le fait que l'élément de traction du dispositif de traction (K1) comprend und vis de calibrage munie d'une échelle de température (TS1).

10. Dispositif de mesure suivant les revendications 6 ou 8, caractérisé par le fait que l'élément de poussée du dispositif de compression (K2) comprend une vis de calibrage munie d'une échelle de température (TS2).

11. Dispositif de mesure suivant la revendication 6, caractérisé par le fait que la règle de mesure (M2) rigide en flexion est fixée aux deux extrémités (M2a, M2b) par ses deux surfaces frontales (MSa, MSb) aux surfaces de poussée (BDa, BDb) des deux éléments de fixation (B2a, B2b) à l'aide d'une couche de colle (KSa, KSb).

12. Dispositif de mesure suivant la revendication 6, caractérisé par le fait que la règle de mesure (M2) rigide en flexion est serrée aux deux extrémités (M2a, M2b) par ses surfaces frontales (MSa, MSb) contre les surfaces de poussée (BDa, BDb) des deux éléments de fixation (B2a, B2b) à l'aide d'un élément de maintien.

13. Dispositif de mesure suivant la revendication 2, caractérisé par le fait que le support de règle de mesure (G) est formé d'au moins deux pièces aboutées.

**Claims**

1. Position measuring device for measuring the relative position of two objects, in which a measuring scale directly carrying a graduation is connected to the first object and a sensing unit sensing the graduation of the measuring scale is conected to the second object and the coefficients of thermal expansion of the measuring scale and the first object are different, characterized in that, to compensate for different thermal vibrations in length between the measuring scale (M) and the first object (S), the measuring scale (M) is connected rigidly to the first object (S) at least at both ends (Ma, Mb) and is acted upon at at least one end (Mb) by a calibrated stressing device (K) only for a temperature compensation of the measuring scale (M) relative to the first object (S) preceding the rigid fixing on the first object (S).

2. Measuring device according to claim 1, characterized in that the measuring scale (M) is arranged slightly displaceable longitudinally on a measuring scale carrier (G) stiff against bending and is rigidly connected at least at both ends (Ma, Mb) directly to a respective fixing element (Ba, Bb), in that each of these fixing elements (Ba, Bb) is fixed rigidly on the first object (S) and is connected to the measuring scale carrier (G) and in that at least one fixing element (Bb) comprises the stressing device (K) for acting on the measuring scale (M).

3. Measuring device according to claim 2, characterized in that a first fixing element (B1a) is fixed directly to the first end (G1a) of the measuring scale carrier (G1) and a second fixing element (B1b) is connected to the second end (G1b) of the measuring scale carrier (G1) movable in the measuring direction X and in that the measuring scale (M1) consists of a flexible measuring band and the stressing device (K1) consists of a stretching device in the second fixing element (B1b).

4. Measuring device according to claim 2, characterized in that a first fixing element (B2a) is fixed directly to the first end (G2a) of the measuring scale carrier (G2) and a second fixing element (B2b) is connected to the second end (G2b) of the measuring scale carrier (G2) movable in the measuring direction X, in that the measuring scale (M2) is formed stiff against bending and in that the stressing device (K2) consists of a stretching device and/or of a compressing device in the second fixing element (B2b).

5. Measuring device according to claim 2 or 3, characterized in that the stretching device (K1) consists of at least one traction element arranged in the fixing element (B1b) and which bears directly on the measuring scale carrier (G1).

6. Measuring device according to claim 4, characterized in that the measuring scale (M2) stiff against bending bears at both ends (M2a, M2b) with its end faces (MSa, MSb) on pressure faces (BDa, BDb) of the two fixing element (B2a, B2b) and in that the compressing device (K2) consists of at least one pressure element arranged in the fixing element (B2b) and which directly engages the measuring scale carrier (G2).

7. Measuring device according to claim 3 or 5, characterized in that the measuring scale (M1) in the form of a flexible band comprises a graduation (T1) undersized by a certain amount and is capable in the stretched state of temperature compensation relative to the first object (S1) by means of a temperature scale (TS1) of the stretching device (K1).

8. Measuring device according to claim 4 or 6, characterized in that the measuring scale (M2) stiff against bending comprises a graduation (T2) oversized by a certain amount and is capable in the compressed state of temperature compensation relative to the first object (S2) by means of a temperature scale (TS2) of the compressing device (K2).

9. Measuring device according to claim 6 or 7, characterized in that the traction element of the stretching device (K1) consists of a calibrated screw provided with a temperature scale (TS1).

10. Measuring device according to claim 6 or 8, characterized in that the pressure element of the compressing device (K2) consists of a calibrated screw provided with a temperature scale (TS2).

11. Measuring device according to claim 6, characterized in that the measuring scale (M2) stiff against bending is fixed at both ends (M2a, M2b) with its end faces (MSa, MSb) on the pressure faces (BDa, BDb) of the two fixing elements (B2a, B2b) by means of an adhesive layer (KSa, KSb).

12. Measuring device according to claim 6, characterized in that the measuring scale (M2) stiff against bending is clamped at both ends (M2a, M2b) with its end faces (MSa, MSb) on the pressure faces (BDa, BDb) of the two fixing elements (B2a, B2b) by means of a holder.

13. Measuring device according to claim 2, characterized in that the measuring scale carrier (G) is formed from at least two mutually abutting portions.

Fig. 1

EP 0 163 857 B1

**Fig. 2**